Europäisches Patentamt

European Patent Office

Office européen des brevets

(11) Publication number: 0 349 465
A2

# EUROPEAN PATENT APPLICATION

(21) Application number: 89480097.8

(22) Date of filing: 07.06.89

(51) Int. Cl.⁵: **G 06 F 15/403**

(30) Priority: 30.06.88 US 213424

(43) Date of publication of application:
03.01.90 Bulletin 90/01

(84) Designated Contracting States: **DE FR GB**

(71) Applicant: **International Business Machines Corporation
Old Orchard Road
Armonk, N.Y. 10504 (US)**

(72) Inventor: **Barker, Barbara A.
2800 Carmel Drive
Round Rock Texas 78681 (US)**

**Edel, Thomas R.
9410 Topridge Drive
Austin Texas 78750 (US)**

**Stark, Jeffrey A.
2905 Valleyview Drive
Grapevine Texas 76051 (US)**

(74) Representative: **Tubiana, Max
Compagnie IBM France Département de Propriété
Intellectuelle
F-06610 La Gaude (FR)**

(54) Real time compilation of dynamically generated variable data for use in structured data streams.

(57) A method is disclosed for interpreting dynamically gener-ated variable data for insertion within a structured data stream or for use in processing such a data stream. Structured data streams typically include a plurality of components, each component having multiple parameters therein. A trigger element, such as a flag within the data stream is utilized to provide an initial link or reference to one of a plurality of variable construct definitions which includes a reference to at least one other variable construct definition. The variable data dynamically generated by the referenced variable construct definitions is then utilized in combination for insertion into the data stream, or for use in processing a portion of the data stream. As a result of the utilization of variable construct definitions, the variable data may be easily modified by a receiver by the utilization of that definition. In this manner, complex variable data expressions may be dynamically compiled or generated by reference to a plurality of variable construct definitions from a non-variable construct within the data stream.

EP 0 349 465 A2

Description

# REAL TIME COMPILATION OF DYNAMICALLY GENERATED VARIABLE DATA FOR USE IN STRUCTURED DATA STREAMS

## BACKGROUND OF THE INVENTION

This invention relates in general to digital communications and in particular to the management and processing of data streams in a manner which permits complex variable data expressions to be dynamically generated for use within a structured data stream.

Management of a data stream in a digital communications network, such as a local area network (LAN), or larger teleprocessing networks, presents many problems, particularly when it is desired to dynamically compile or generate complex variable data expressions for use within a structured data stream. By complex variable data expressions, what is meant is a data stream construct which is composed of multiple general variable data expressions which are derived as a result of processing a reference to a general variable data definition nested within a second general variable data definition, or by combining one or more general variable data definitions that may contain nested references to other general variable data descriptions with intervening primitive data stream constructs in order to build a compound result value.

Certain known systems exist which permit the inclusion of selected variable data within a data stream as long as the variable data is constrained to a preselected field. Another known system, IBM's Document Composition Facility (DCF), allows the inclusion of conditional programming logic (e.g. if, then, else) within a data file. A preset system or user-specified variable may be tested to determine which part of the file identified by a label is to be processed next. The logic is hard-coded in the file and is not readily accessible for update if changes are required. In other systems externally defined and precompiled macros or procedures may be executed during data stream processing, but as with coded programming instructions, the content of these structures are static rather than dynamically generated. Neither the exploitation of truly variable data nor the efficient utilization of data stream resources is permitted by either of these described systems. Additionally, the compilation or generation of complex variable data expressions is not allowed.

The IBM Office Document Architecture (ODA) provides for the value of attributes of logical or layout document elements to be specified by an expression which may be included within an interchange data element. The ODA expression types are string, numeric and object identifier. A string or numeric expression is used to reference the value of an attribute belonging to another logical or layout element, while an object identifier expression is used to select a specific logical or layout element identifier, and is usually included as a parameter in a string or numeric expression. Although data can be generated while processing an ODA expression, the expression cannot be arbitrarily associated with or shared by other ODA document elements during interchange. Expressions are permitted for defining subordinates, values of attributes or content of logical or layout elements within an ODA document, and cannot be used to represent variable constructs as defined by the present invention.

Recently, a data stream management system has been proposed which utilizes a shell structure which includes formatting and processing information which may be utilized to manage and process tagged constructs or elements that are independent of the data content, but may appear concurrently with the data, in a data stream representation of a document created by an editor or other similar application. The shell structure may be off-line, or separate from the data stream and transmitted independently of the data stream or be included within the data stream.

The above-referenced system includes a tag element function which links constructs in a data stream by referencing named constructs in the shell structure. The constructs in the shell structure specify the rules, relationships and formatting information that govern the processing and management of a portion of the data stream. While this system represents an advance in the efficiency and flexibility of data stream management, it is designed to control the processing of data stream content and cannot be utilized to create, evaluate or calculate the status of previously nonexistent complex variable data expressions which may then be utilized to process a portion of the data stream or be inserted into the data stream.

Therefore, it should be obvious that a need exists for an improvement in data stream management techniques which will permit the compilation and generation of dynamically generated variable data for use in processing or generating structured data streams.

## SUMMARY OF THE INVENTION

It is therefore one object of the present invention to provide an improved data stream management technique.

It is another object of the present invention to provide an improved data stream management technique which enhances data stream flexibility with regard to the utilization of complex variable data expressions for use within a highly structured data stream.

The foregoing objects are achieved as is now described. Structured data streams typically include a plurality of components, each component having multiple parameters therein. A trigger element, such as a flag within the data stream is utilized to provide an initial link or reference to one of a plurality of variable construct definitions which includes a reference to at least one other variable construct definition. The variable data dynamically generated by the referenced variable construct definitions is then utilized in combination for insertion into the data stream, or for use in processing a portion of the data stream. As a result of the utilization of variable construct definitions, the variable data may be easily modified by a receiver by the utilization of that definition. In this manner, complex variable data expressions may be dynamically compiled or generated by reference to a plurality of variable construct definitions from a non-variable construct within the data stream.

BRIEF DESCRIPTION OF THE DRAWINGS

The novel features believed characteristic of the invention are set forth in the appended claims. The invention itself; however, as well as a preferred mode of use, further objects and advantages thereof, will best be understood by reference to the following detailed description of an illustrative embodiment when read in conjunction with the accompanying drawings, wherein:

FIGURE 1 is a pictorial representation of a portion of a structured data stream demonstrating the compilation of a complex variable data expression;

FIGURE 2 is a pictorial representation of a more detailed representation of an example of the compilation of a complex variable data expression; and

FIGURE 3 is a logic flow diagram of the method of the present invention.

DETAILED DESCRIPTION OF THE PREFERRED EMBODIMENT

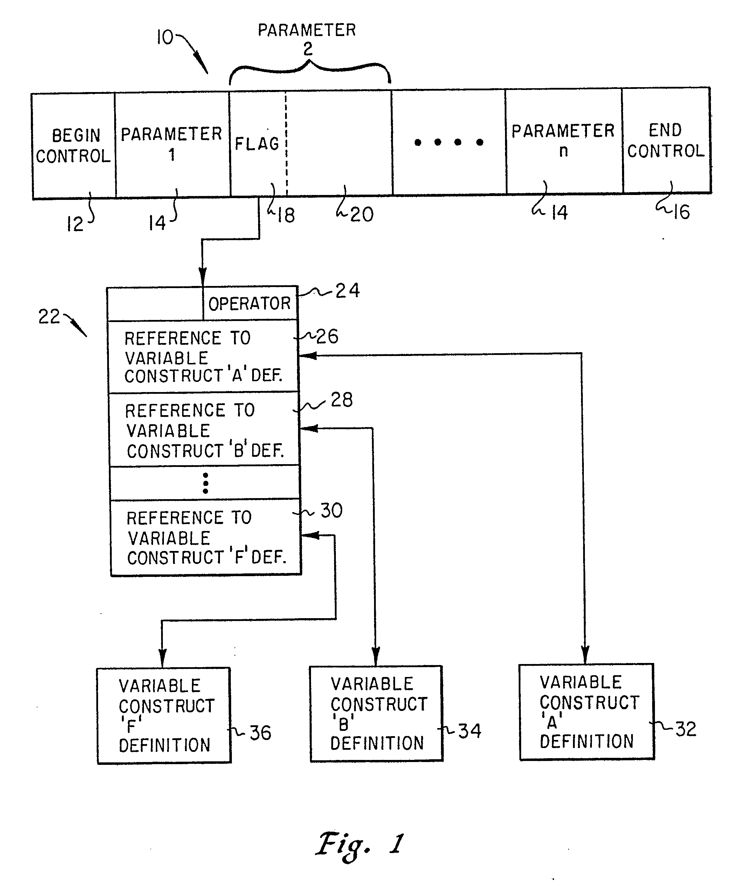

With reference now to the figures, and in particular with reference to Figure 1, there is depicted a pictorial representation of a portion of a structured data stream 10. As can be seen, data stream 10 starts with a begin control 12 and includes a plurality of parameters 14, each of which comprises one or more structured fields. Finally, an end control 16 signifies the ending of the portion of data stream 10 which is depicted.

As is illustrated, in accordance with the method of the present invention, a selected parameter within the portion of data stream 10 which is depicted, may include a trigger or flag 18 which provides a reference to a control sequence 22, which may be "off-line". That is, control sequence 22 may not be located within data stream 10. For example, in the depicted embodiment of the present invention, control sequence 22 may be transmitted from an originating station to a receiving station independently of data stream 10 and may be stored in an off-line local memory device in any form recognizable to the network. Alternately, control sequence 22 may be transmitted within data stream 10 as a resource definition which is not directly in line with the reference thereto.

Contained within control sequence 22 is operator 24 which specifies how the complex variable data expressions, which will be compiled in accordance with the present invention are to be interpreted in order to be combined to produce a single result value. Also contained within control sequence 22 are a plurality of references 26, 28 and 30 to variable construct definitions. As can be seen, reference 26 links control sequence 22 with variable construct definition 32. Similarly, reference 28 is utilized to link control sequence 22 with variable construct definition 34 and reference 30 within control sequence 22 provides a link to variable construct definition 36. Of course, those skilled in the art will appreciate that a greater or lesser number of variable construct definitions may be referenced in this manner. Additionally, those skilled in the art should appreciate that the variable construct definitions referred to in this manner may be linked sequentially or may be selectively accessed as a direct or indirect result of a previous variable construct definition. That is, control sequence 22 may initially reference a single variable construct definition and the results of the evaluation process which takes place, with regard to that variable construct definition, may be utilized to selectively access one of a plurality of additional variable construct definitions. In this manner, it is possible to construct a so-called "complex variable data expression."

A complex variable data expression is composed of multiple simple expressions which are derived by resolving a reference to a variable construct definition which may be nested within a second variable construct definition to produce an interim result value, or by combining one or more variable data stream construct definitions that may contain nested references with intervening primitive data stream constructs to form a compound result value.

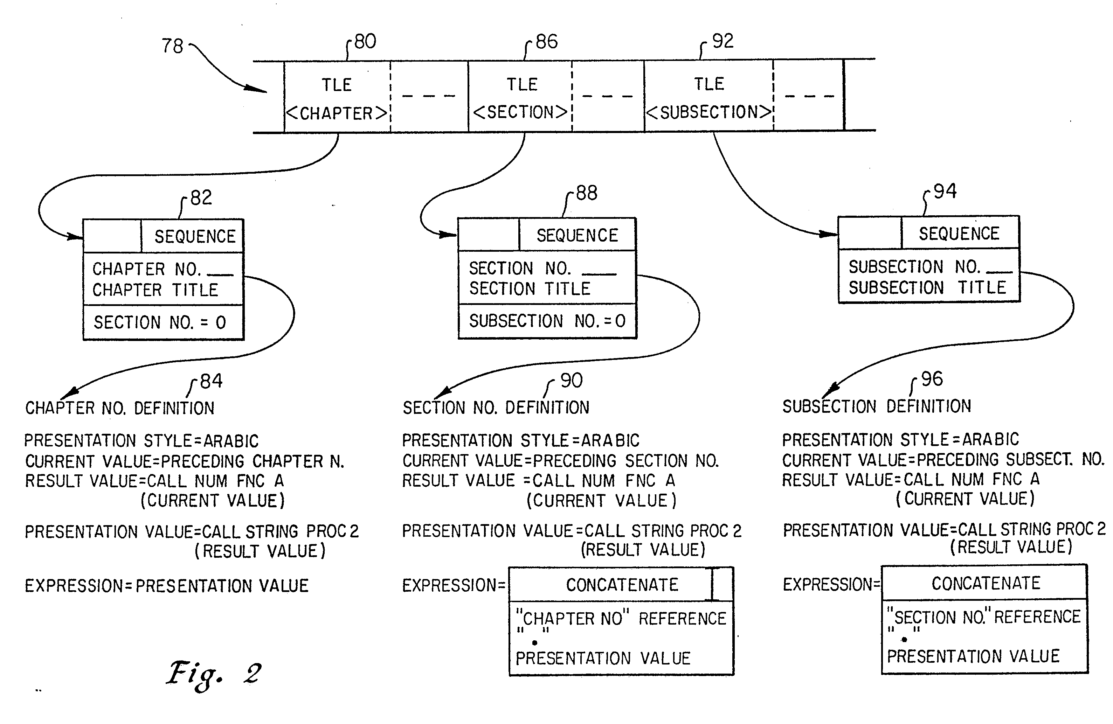

Referring now to Figure 2, there is depicted a pictorial representation of an example of the compilation of a complex variable data expression. As may be seen, a portion of data stream 78 is illustrated which includes therein a reference or Tag Logical Element 80 which refers to a control sequence 82, which may be utilized to generate a previously nonexistent variable construct "Chapter Number." As is depicted, control sequence 82 refers to a variable construct definition 84 which may be utilized to determine the value of "Chapter Number." Included within variable construct definition 84 are: presentation style information; current value information; presentation value information; and, a determination of the manner in which the result will be expressed. Further, it should be noted that control sequence 82 also is utilized to set "Section Number" equal to zero upon the definition of a "Chapter Number" so that the initial "Section Number" may be properly generated.

Next, Tag Logical Element 86, is utilized to refer to control sequence 88 which in turn is utilized to generate a previously nonexistent variable construct "Section Number" and to set the initial "Subsection Number" equal to zero upon the initial definition of a "Section Number." As above, control sequence 88 refers to variable construct definition 90 which is utilized to determine the value of "Section Number." As with the determination of "Chapter Number," variable construct definition 90 includes various format, style and presentation information; however, the expression requires a concatenation of the previously calculated "Chapter Number," a period, and the newly calculated "Section Number."

Finally, Tag Logical Element 92 refers to control sequence 94 which is utilized to generate a previously nonexistent variable construct "Subsection Number." As above, control sequence 94 refers to a variable construct definition 96 which is utilized to determine the value of "Subsection Number." After this value is determined, the expression is constructed by cocatenating the previously calculated "Section Number," a period and the newly calculated "SubSection Number." In this manner, those skilled in the art will appreciate that a complex variable construct has been generated which requires the combination of one or more variable data stream construct definitions to create a complex expression including previously nonexistent data which may then be utilized to process a portion of the data stream or incorporated within the data stream.

The present invention provides an improvement in data stream flexibility in the utilization of complex variable data expressions by utilizing a description of the manner in which the complex expression is determined rather than the complex expression itself. This description may be parsed, compiled, or evaluated by a data stream processor which allows for a more efficient representation and execution of a complex variable data expression in real time. In this manner, sub-expressions utilized by multiple constructs within a data stream may be shared since they are accessed by references thereto rather than sequentially in the data stream. This results in substantial savings in processing time and execution efficiency since such shared expressions need only be coded once to be referred to by multiple expressions.

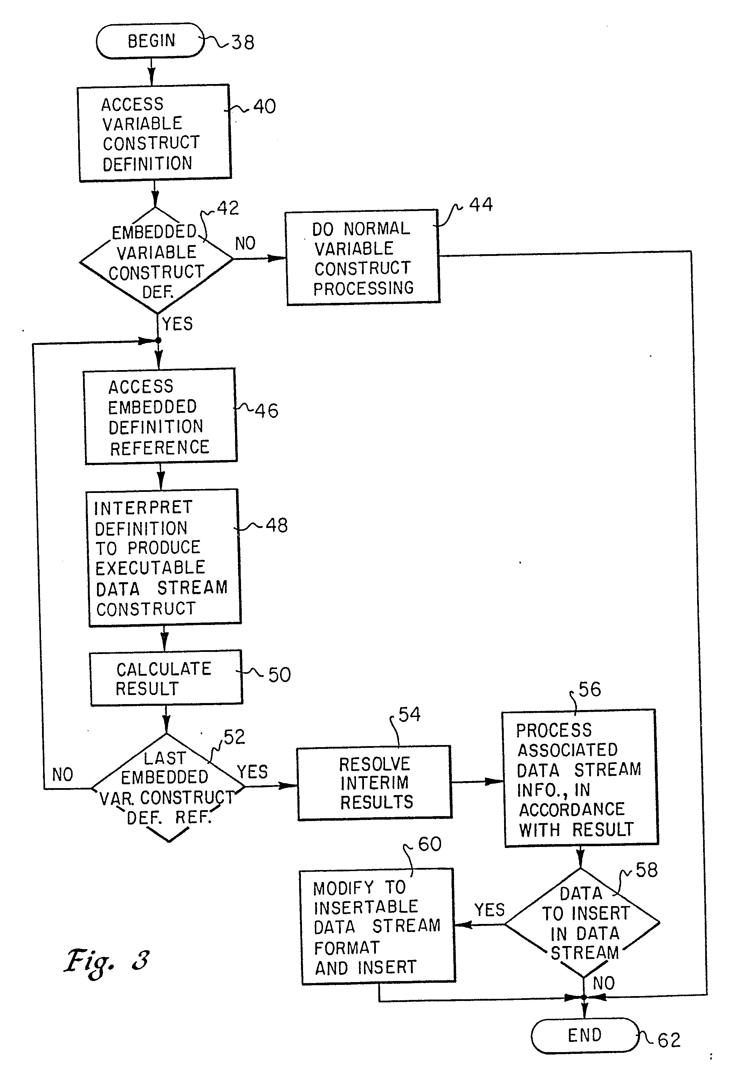

Referring now to Figure 3, there is depicted a logic flow diagram of the method of the present invention. As can be seen, after beginning as illustrated in block 38, block 40 depicts the accessing of a variable construct definition. Block 42 is then utilized to determine whether or not the variable construct definition accessed in block 40 includes an optional embedded variable construct definition which is nested within the accessed definition. If not, block 44 illustrates the normal processing of the variable construct and the process ends as indicated in block 62.

In the event a second variable construct definition is embedded within the accessed variable construct definition, the second embedded definition is then accessed as illustrated in block 46.

Next, as depicted in block 48, the second accessed definition is interpreted to produce an executable data stream construct. Block 50 illustrates the calculation of or evaluation of the result of this interpretation and block 52 then determines whether or not there are references to additional embedded variable construct definitions. In the event additional embedded variable construct definitions are referred to, the program returns to block 46 and continues.

After the last embedded variable construct definition has been referred to, block 54 illustrates the resolution of the interim results which have been generated by the multiple variable construct definitions which have been accessed. Block 56 depicts the processing of the associated data stream information in accordance with this result.

Block 58 is next utilized to determine whether or not the process of referring to multiple variable construct definitions has generated data which must be inserted into the data stream. If not, the process again terminates as depicted in block 62. In the event the process has generated a complex variable data expression result which must be inserted into the data stream, block 60 illustrates the modification of that data into an insertable data stream format and the insertion thereof. Finally, as discussed above, the program terminates as shown in block 62.

While the invention has been particularly shown and described with reference to a preferred embodiment, it will be understood by those skilled in the art that various changes in form and detail may be made therein without departing from the spirit and scope of the invention.

## Claims

1. A method of dynamically generating complex variable data expressions for use in processing a data stream which allows a high degree of flexibility while minimizing data stream clutter, said method comprising the steps of:
creating a plurality of variable construct definitions, each of said plurality of variable construct definitions dynamically generating variable data information in response to a reference thereto;
dynamically generating a complex variable expression from said variable data information generated by at least two of said plurality of variable construct definitions; and
processing at least a portion of said data stream in accordance with said dynamically generated complex variable expression.

2. The method according to Claim 1 further including the step of:
creating a control sequence including at least one reference therein to a first one of said plurality of variable construct definitions.

3. The method according to Claim 1 wherein said step of creating a plurality of variable construct definitions is performed by an originator of said data stream.

4. The method according to Claim 1 wherein said step of creating a plurality of variable construct definitions is performed by an end user independent of said data stream.

5. The method according to Claim 1 further including the step of separately transmitting said plurality of variable construct definitions and said data stream.

6. The method according to Claim 1 further including the step of transmitting said plurality of variable construct definitions with said data stream.

7. The method according to Claim 2 further including the step of maintaining said plurality of variable construct definitions and said control sequence in a form recognized by processors of said data stream.

8. The method according to Claim 1 further including the step of inserting at least a portion of said complex variable expression into said data stream.

9. A method of dynamically generating variable data for insertion into a data stream which allows a high degree of flexibility while minimizing data stream clutter, said method comprising the steps of:
creating at least one variable construct definition for dynamically generating variable data in response to a reference thereto; and
inserting said dynamically generated variable data into said data stream.

10. The method according to Claim 9 wherein said step of creating at least one variable construct definition is performed by an originator of said data stream.

11. The method according to Claim 9 wherein said step of creating at least one variable construct definition is performed by an end user independent of said data stream.

12. The method according to Claim 9 further including the step of separately transmitting said at least one variable construct definition and said data stream.

13. The method according to Claim 9 further including the step of transmitting said at least one variable construct definition with said data stream.

14. The method according to Claim 9 further including the step of maintaining said variable construct definition in a form recognized by processors of said data stream.

15. The method according to Claim 7 wherein said step of creating at least one variable construct definition includes the step of creating multiple variable construct definitions and wherein said variable data inserted into said data stream comprises information generated by a plurality of variable construct definitions.

Fig. 1

PRESENTATION STYLE=ARABIC
CURRENT VALUE=PRECEDING CHAPTER N.
RESULT VALUE=CALL NUM FNC A
          (CURRENT VALUE)

PRESENTATION VALUE=CALL STRING PROC 2
          (RESULT VALUE)

EXPRESSION=PRESENTATION VALUE

PRESENTATION STYLE=ARABIC
CURRENT VALUE=PRECEDING SECTION NO.
RESULT VALUE =CALL NUM FNC A
          (CURRENT VALUE)

PRESENTATION VALUE=CALL STRING PROC 2
          (RESULT VALUE)

PRESENTATION STYLE=ARABIC
CURRENT VALUE=PRECEDING SUBSECT. NO.
RESULT VALUE=CALL NUM FNC A
          (CURRENT VALUE)

PRESENTATION VALUE=CALL STRING PROC 2
          (RESULT VALUE)

Fig. 2

Fig. 3